# EUROPÄISCHE PATENTANMELDUNG

(11) **EP 2 230 706 A1**
(43) Veröffentlichungstag der Anmeldung: **22.09.2010**
(21) Anmeldenummer: 09003718.5
(22) Anmeldetag: 15.03.2009
(51) Int. Cl.: H01M 4/04, H01M 4/13, H01M 10/05, H01M 10/42

(54) **Verfahren zur Herstellung wiederaufladbarer Lithium Batterien mit thermisch beschichteten Kathoden und Anoden und der Möglichkeit des Elektrolytenaustausches**

(71) Anmelder: OGRON BV, 2352 BL Leiderdorp (NL)
(72) Erfinder: Winterberg, Franz W., 9000 Aalborg (DK)
(74) Vertreter: Schneider, Andreas

(57) **Zusammenfassung**

Verfahren zur Herstellung wiederaufladbarer Lithium - Ionen - Polymer Batterien mit thermisch beschichteten Kathoden und Anoden und der Möglichkeit des Elektrolytenaustausches.
Durch die vorliegende Erfindung werden die Nachteile der durch die bekannten Verfahren hergestellten Lithium Batterien zu eliminiert und eine sehr lange Lebensdauer (30 Jahre und mehr) erreicht.
Dies gelingt dadurch, dass auf die Verwendung von Zusatzstoffen, wie Polymeren, Leitruss, oder sonstigen Additiven, sowie auf das Trägerlösungsmittel gänzlich verzichtet wird, und lediglich die Aktivmaterialien, sowohl auf den Kathodenkollektor, als auch auf den Anodenkollektor durch thermische Beschichtung mit dem jeweiligen Kollektor zu einer Einheit verbunden werden.

## Beschreibung

Die Erfindung betrifft ein Verfahren zur Herstellung wiederaufladbarer Lithium - Ionen - Polymer Batterien mit thermisch beschichteten Kathoden und Anoden und der Möglichkeit des Elektrolytenaustausches. Für die Kathode kommen hierbei vor allem Übergangsmetalloxide wie LiCoO₂, LiNiO₂ oder LiMn₂O₄, aber auch Phosphate wie LiFeP04, LiNiP04, LiMnPO4, oder Silicaten, Sulfaten, Carbonaten, Phosphaten, Nitriden, Amiden, Imiden und Carbiden der Elemente der I., II., III. oder IV. Hauptgruppe oder der IV. zum Einsatz. Für die Anode wird Li4Ti5O12, oder Silicaten, Sulfaten, Carbonaten, Phosphaten, Nitriden, Amiden, Imiden und Carbiden der Elemente der I., II., III. oder IV. Hauptgruppe oder der IV. als Anodenmaterial verwendet Diese Batterieart ist aufgrund ihrer elektrischen Parameter, wie der hohen Energiedichte und einem für Lithium Batterien nicht vorhandenem Sicherheitsrisiko, in Vergleich zu Lithium Batterien der heute bekannten Herstellungsverfahren, sowie von Batterien dieser Art, die metallisches Lithium enthalten, für die Anwender im mobilen und stationären und auch im Konsumerbereich von größter Bedeutung.

Einzelheiten zur Herstellung von Lithium Batterien nach der herkömmlichen Art, sowie Lithium Polymer Batterien sind aus der Literatur bekannt, u.a. "Handbook of Battery Materials", Herausgeber I.O.Besenhard, Verlag VCH, Weinheim 1999, zu ersehen. Andere spezielle Herstellungsverfahren, wie z.B. das Bellcore - Verfahren sind in "Lithium Ion Batteries", Herausgeber M. Wakihara and O.Yamamoto, Verlag VCH, Weinheim 1998 beschrieben. Weitere Einzelheiten sind beschrieben "Industrial Applications of Batteries", G. Pistoia and M. Broussely Eds, Elsevier, Amsterdam, London & NY, pp. 119-201
Weitere Einzelheiten zu geeigneten Lösungsmitteln und Leitsalzen sind in dem Standardwerk "Lithium Batteries - New Materials, Developments and Perspectives" ed. by G.Pistoia, Industrial Chemistry Library Vol. 5, Elsevier Science, Amsterdam 1994 beschrieben.
Weitere Einzelheiten zu geeigneten interkalationsfähigen Übergangsmetalloxiden sind in dem Standardwerk "Lithium Batteries - New Materials, Developments and Perspectives" ed. by G.Pistoia, Industrial Chemistry Library Vol. 5, Elsevier Science, Amsterdam 1994 beschrieben.
Die Verwendung von Eisenphosphaten und generell Phosphaten als Kathodenmaterial ist durch Abstracts der Batteriy and Fuel Cell Symposium, Graz Apr. 18-22, 2004 Seite 127, sowie verschiedenen US Patenten u.a. US Patent 2004/0185343 beschrieben, sowie nanostrukturiertes Lithium Titanat in Veröffentlichungen von Altair Nano und u.a. im US Patent 2007/0092798.

Eine wiederaufladbare Lithiumbatterie besteht im Wesentlichen aus zwei Einlagerungselektroden, zwischen denen sich das Lithiumion durch einen Elektrolyten bewegt. Für die Kathode kommen hierbei vor allem Übergangsmetalloxide wie LiCo0₂, LiNiO₂ oder LiMn₂O₄, aber auch Phosphate wie LiFeP04, LiNiPO4, LiMnP04, zum Einsatz. Für die Anode wird im allgemeinen Interkalationsgraphit verwendet, aber auch Li4Ti5O12, oder nanoskalige Siliziumpartikel. Der Elektrolyt besteht aus aprotischen organischen Lösungsmitteln, wie Ethylencarbonat (EC), Propylencarbonat (PC), Dimethylcarbonat (DMC) oder Diethylcarbonat (DEC), und einem Leitsalz, wie LiClO₄, LiPF₆, LiBF₄, oder LiCF₃SO₃.
Diese Lithium Batterien haben eine begrenzte Zyklenfähigkeit (800-20.000 Zyklen) und dadurch eine ebenso begrenzte Lebensdauer.
Dieses Lebensdauerproblem von elektrochemischen Energie-Speichern und - Wandlern ist vielschichtig. Dies gilt insbesondere auch für Lithium-Ionen-Batterien. Ein zentrales Lebensdauerproblem der Lithium - Ionen - Polymer-Zellen sind die Reaktionen der Elektrodenmaterialien unter- und miteinander, sowie mit der Elektrolytlösung.
Dies hat unter anderem zur Folge, dass der Elektrolytraum mit der Zeit sukzessive austrocknet und parallel für die Zellperformance schädliche Degradationsprodukte der Elektrolytlösung irreversibel auf den Elektrodenüberflächen, in der Elektrolytlösung und im Gasraum der Zelle angereichert werden. Zur Verlängerung des Zyklen- und Kalenderlebens ist ein Nachfüllen oder sogar ein Austausch der Elektrolytlösung - wenn möglich sogar mehrmals während der avisierten Betriebsdauer - deshalb als sehr zweckmäßig und lebensverlängernd einzustufen, gerade auch für Anwendungen in großen Batterien.
Bei den bekannten Herstellungsverfahren werden die Aktivmaterialien der Elektroden auf entsprechende Kollektorfolien unter Verwendung eines Trägerlösungsmittels, oder auch mit oder ohne Trägerlösungsmittel durch Extrusion schichtförmig aufgebracht.
Nach Entfernung des Trägerlösungsmittels werden die beschichteten Kollektorfolien dann, getrennt durch eine poröse Separatorfolie, zur Batterie zylindrisch, oder prismatisch gewickelt, bzw. prismatisch gefaltet, oder prismatisch gestapelt. Die poröse Separatorfolie besteht z.B. aus Polyethylen oder Polypropylen und dient bei Gebrauch zur Aufnahme des flüssigen Elektrolyten, der den ionischen Kontakt herstellt.
Im Gegensatz dazu ist in der erfindungsgemäßen Batterie.

Die Aufgabe der Erfindung besteht somit darin, die Nachteile der durch die bekannten Verfahren hergestellten Lithium Batterien zu eliminieren, um dadurch eine sehr lange Lebensdauer (30 Jahre und mehr) zu erreichen.
Erfindungsgemäß gelingt dies dadurch, dass auf die Verwendung von Zusatzstoffen, wie Polymeren, Leitruss, oder sonstigen Additiven, sowie auf das Trägerlösungsmittel gänzlich verzichtet wird, und lediglich die Aktivmaterialien, sowohl auf den Kathodenkollektor, als auch auf den Anodenkollektor durch thermische Beschichtung z.B. durch Vakuum Bedampfung, oder z.B. durch Spritzen mit dem jeweiligen Kollektor zu einer Einheit verbunden werden, wobei auf der Folie ein 2-3 cm breiter Kontaktstreifen frei von dem Aktivmaterial bleibt.

Erfindungsgemäß wird dieser Vorgang über die Technik der Thermischen Beschichtung realisiert, so dass das gewählte Aktivmaterial mit dem Metallkollektor, entweder Kupfer-, oder Aluminiumfolien Gitterfolien, oder zu einer Einheit verbunden wird.

### Beispiel 1:

Gegenstand der Erfindung ist somit auch ein Verfahren zur trägerlösungsmittelfreien Herstellung von wiederaufladbaren Lithium-Polymer-Batterien, oder Lithium Ionen Batterien.

Erfindungsgemäß werden die Aktivmassen in einer heißen Quelle bis nahe seiner Schmelztemperatur oder über die Schmelztemperatur hinaus erwärmt und mittels eines Zerstäubergases in Richtung der jeweiligen Kollektorfolie (AL, oder Cu), beschleunigt, wo sich die auftreffenden Partikel beim Impakt zu einer Funktionsschicht verdichten.

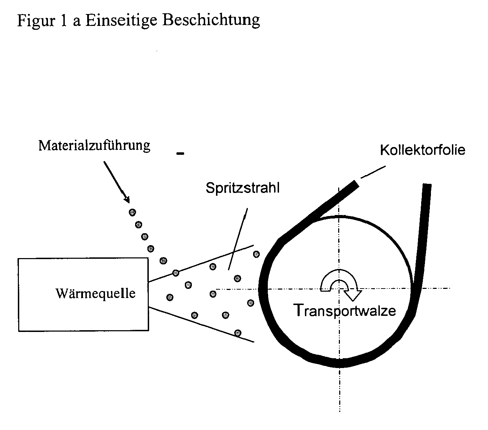

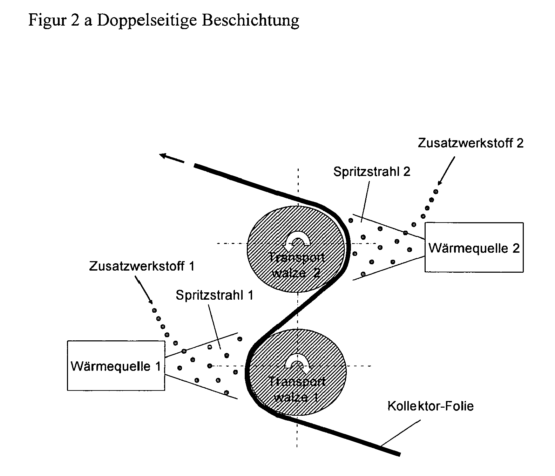

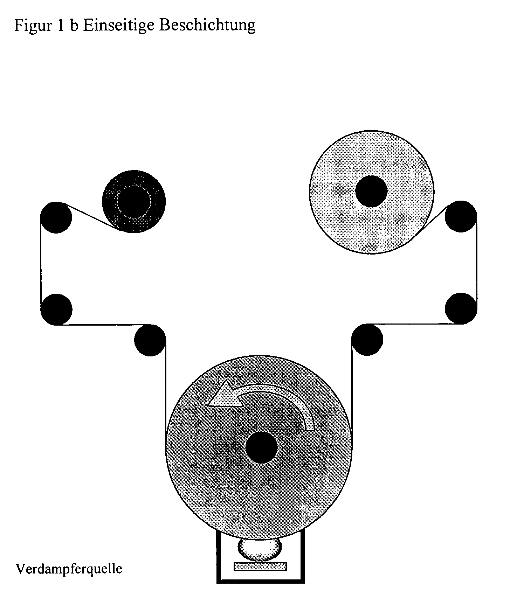

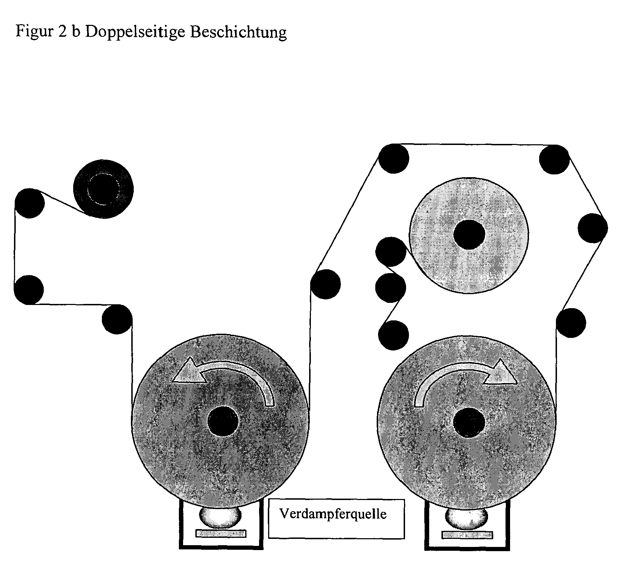

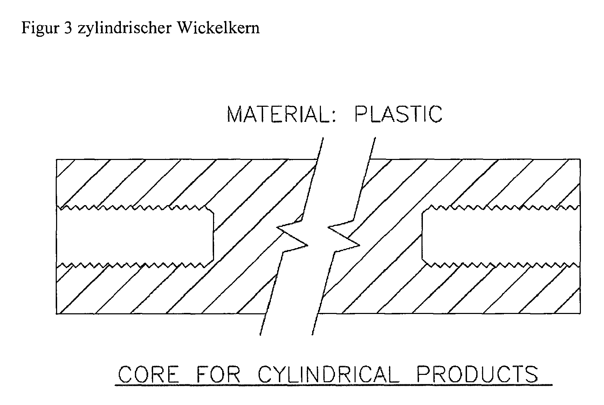

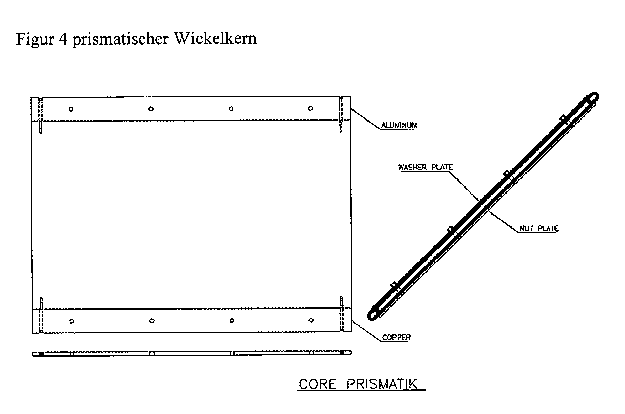

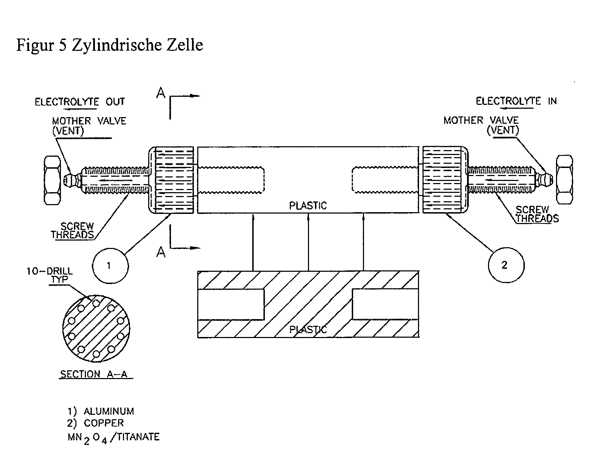

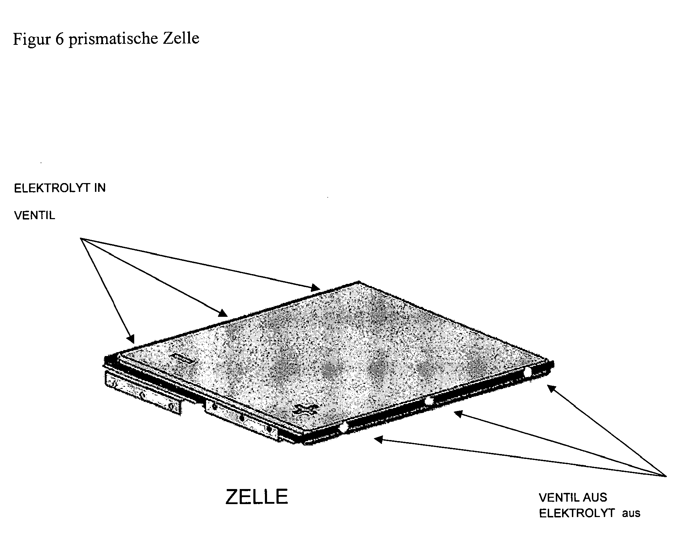

Die jeweilige Kollektorfolie (AL / Cu) wird auf einen Halter aufgespannt oder über eine Umlenkung, vorzugsweise eine Umlenk- oder Transportrolle (siehe Abbildung 1), gespannt.

Beim Beschichtungsprozess wird das Schichtmedium in die heiße Zone (z. B. Plasma) gefördert. Die Zuführung kann zentrisch (axial) oder radial (z.B. ringförmig) erfolgen. Brenner und Kollektorfolie werden relativ zueinander bewegt, so dass ein gleichmäßiger Schichtauftrag erfolgt. Die Prozessparameter werden so eingestellt, dass die Kollektorfolie mechanisch und thermisch nur so stark beansprucht wird, dass es keine Schädigung oder für die spätere Funktion unzumutbare Veränderung erfährt. Abhängig vom Beschichtungsverfahren, der Auftragsleistung sowie den Folieneigenschaften kann die Kollektorfolienkühlung erfolgen.

Der beschriebene Beschichtungsvorgang kann auch doppelseitig erfolgen.

Das beschrieben Verfahren der thermischen Beschichtung umfasst alle Techniken, die mit verwandten Anordnungen zur Herstellung von Beschichtungen eingesetzt werden, die jedoch nicht unter dem Oberbegriff "Thermisches Spritzen" ([1, 2]) zusammengefasst werden. "Verwandte Anordnungen" sind alle Techniken, bei denen vorgewärmte oder schmelzflüssige Partikel beschleunigt werden, bzw. durch Vakuum Bedampfung der Partikelstrom gezielt auf einen von Metallkollektor / Folie einseitig, oder doppelseitig, auch von Metallgitterfolien und oder aus mit Metall überzogenen Materialien bestehend aus Al, Cu, oder Ni von Kathoden und Anoden für Lithium Batterien gerichtet wird, um auf diesem einen Verbund der Partikel aus Aktivmaterialien zu erzeugen.

Weitere Einzelheiten / Beschreibungen der Beschichtungstechnologien sind unter anderem in der folgenden Literatur zu ersehen:
[1] Lugsr Echeider, E. [Hrsg.]: Handbuch der thermischen Spritztechnik: Technologien - Werkstoffe - Fertigung, Fachbuchreihe Schweißtechnik, Band 139, Düsseldorf, Verlag für Schweißen und Verwandte Verfahren, DVS-Verlag, 2002 (ISBN 3-87155-186-4)
[2] Bach, Fr.-W.; Laarmann, A.; Möhwald, K.; Wenz, T.: Moderne Beschichtungsverfahren, Wiley-VCH Verlag GmbH & Co. KGaA, Print ISBN: 9783527309771; Online ISBN: 9783527604272, 2005
Dettorre J.F.,Knorr T.G., Hall E.G. in: Powell C.F., Oxley J.H., Blocher J.M.jr. (Hrsg.): "Vapor Deposition", 2. Aufl., Wiley, New York, (1967), Kap. 3 "Evaporation Processes ".
Deshpandey C.V., Bunshah R.F. in: Vossen J.L., Kern W. (Hrsg): "Thin Film Processes Il", Academic Press, Boston (1991), Kap. II-2: "Evaporation Processes".
Holland L., "Vacuum Deposition of Thin Films", Chapman and Hall, London, 1970.
Glang R. in: Maissel L.I., Glang R., "Handbook of Thin Film Technology", McGraw-Hill, New York (1970), Ch. 1: "Vacuum Evaporation".
Frey H., Kienel G., "Dünnschichttechnologie", VDI-Verlag, Düsseldorf (1987), Kap. 3: "Aufdampfen im Hochvakuum".

Weiterhin ist der Gegenstand der Erfindung **dadurch gekennzeichnet, dass**
die Kollektorfolien der Kathode und Anode einseitig über die gesamte Fläche mit einem min. 20 mm breiten Kontaktrand versehen sind, der frei von Aktivmaterial ist, sowie der Wickelkern für das zylindrische, als auch für das prismatische Wickeln der einzelnen Zellen aus 2 von einander isolierten Teilen besteht, die entweder aus Al /Al, oder Al / Cu besteht und einen Querschnitt von 2 mm oder mehr hat und an den positiven und negativen Kontakten der Zelle ein innerer Widerstand von max. 0.003 mohm vorhanden ist.

Weiterhin ist der Gegenstand der Erfindung **dadurch gekennzeichnet, dass** die äußere Hülle der Zelle an der positiven und negativen Seite der Zelle mit einem oder mehreren Ventilen versehen ist.

Weiterhin ist Gegenstand der Erfindung der mögliche Wechsel des Elektrolyten:
Der Wechsel wird wie folgt vorgenommen:
Die Menge Elektrolyt beträgt in der Regel 4,6 gr/ Ah
Über die Ventile wird nun durch eine Vakuumpumpe der Elektrolyt sanft gezogen beim./. Ventil und gleichzeitig durch das + Ventil die gleiche Menge + 10 % zugegeben.

Nach Abschluss des Vorganges schließen sich die Ventile automatisch.

Als Elektrolyte können alle Elektrolyte eingesetzt werden, wie den angegebene Literaturen beschrieben, sowie die Beschreibungen der unterschiedlichten Elektrolyte in folgenden Literaturen:
[1] D. Auerbach, E. Zinigrad, Y. Cohen, H. Teller, Solid State Ionics, 2002, 148, 405-416.
[2] D.-C. Li, T. Muta, L.-Q. Zhang, M. Yoshio, H. Noguchi, Journal of Power Sources, 2004, 132.
[3] D. Auerbach, B. Markovsky, I. Weissman, E. Levi, Y. Ein-Eli, Electrochimica Acta, 1999, 45, 67-86.
   M.Angew.Chem. 2004, 116, 5096
   Y. Zhou, Currentn Nanoscience 2005, 1, 35.
   F. Endres, Chemphyschem 2002, 3, 144
   N. Borisenko, S.Zein El Abedin, F.Endres, J. Phys. Chem. B 2006, 110, 6250

## Patentansprüche

1. Verfahren zur Herstellung wiederaufladbarer Lithium - Ionen - Polymer Batterien mit thermisch beschichteten Kathoden und Anoden und der Möglichkeit des Elektrolytenaustausches ist **dadurch gekennzeichnet, dass** die Kathode durch thermische Beschichtung einseitig, oder doppelseitig von Metallfolien, Metallgitterfolien und oder aus mit Metall überzogenen Materialien bestehend aus Al mit Übergangsmetalloxiden, wie z.B. LiCoO₂, LiNiO₂ oder LiMn₂O_{4,} oder Phosphate wie z.B. LiFeP04, LiNiP04, LiMnP04 und Silicaten, Sulfaten, Carbonaten, Phosphaten, Nitriden, Amiden, Imiden und Carbiden der Elemente der I., II., III. oder IV. Hauptgruppe oder der IV. hergestellt ist.

2. Verfahren nach Anspruch 1. **dadurch gekennzeichnet ist, dass** die Anode durch thermische Beschichtung einseitig, oder doppelseitig von Metallfolien, Metallgitterfolien und oder aus mit Metall überzogenen Materialien bestehend aus Al oder Cu oder Ni mit z.B. Li4Ti5O12, oder Silicaten, Sulfaten, Carbonaten, Phosphaten, Nitriden, Amiden, Imiden und Carbiden der Elemente der I., II. III. oder IV. Hauptgruppe oder der IV. hergestellt ist.

3. Verfahren nach Anspruch 1. und 2. **dadurch gekennzeichnet ist, dass** der Elektrolyt über Ventile an oder auf der Zelle gewechselt werden kann.

4. Verfahren nach einem oder mehreren Ansprüchen 1-3. **dadurch gekennzeichnet ist, dass** eine, mehrere, oder auch alle Zellen einer Batterie zylindrisch gewickelt sind.

5. Verfahren nach einem, oder mehreren Ansprüchen aus 1-3. **dadurch gekennzeichnet ist, dass** eine, mehrere, oder alle Zellen einer Batterie prismatisch gewickelt sind.

6. Verfahren nach einem, oder mehren Ansprüchen aus 1-3. **dadurch gekennzeichnet ist, dass** die Zelle prismatisch durch falten oder geschichtet hergestellt ist.

7. Verfahren **dadurch gekennzeichnet, dass** der Elektrolyt 2 Ventile an, oder auf der Zelle gewechselt werden kann.
